# EUROPÄISCHE PATENTSCHRIFT

(11) **EP 3 465 899 B1**
(45) Veröffentlichungstag und Bekanntmachung des Hinweises auf die Patenterteilung: **05.07.2023**
(21) Anmeldenummer: 17708427.4
(22) Anmeldetag: 10.02.2017
(51) Int. Cl.: H02P 1/42, H02P 1/04, H02P 1/26

(54) **STEUERUNG UND VERFAHREN ZUR STEUERUNG EINES ANTRIEBSMOTORS EINES WARENTRANSPORTBANDES AN EINER KASSE**
CONTROLLER AND METHOD FOR CONTROLLING A DRIVE MOTOR OF A PRODUCT CONVEYOR BELT AT A CHECKOUT
COMMANDE ET PROCÉDÉ DE COMMANDE D'UN MOTEUR D'ENTRAÎNEMENT D'UNE BANDE TRANSPORTEUSE D'ARTICLES AUPRÈS D'UNE CAISSE ENREGISTREUSE

(30) Priorität: 07.06.2016 DE 102016006971
(43) Veröffentlichungstag der Anmeldung: 10.04.2019
(73) Patentinhaber: Interroll Holding AG, 6592 Sant' Antonino (CH)
(72) Erfinder: SCHANG, Daniel, 41352 Korschenbroich (DE)
(74) Vertreter: Kohlhof, Stephan
(86) Internationale Anmeldenummer: PCT/EP2017/000186
(87) Internationale Veröffentlichungsnummer: WO 2017/211434

(56) Entgegenhaltungen:
- EP-A1- 2 293 426
- EP-A1- 2 763 916
- EP-A2- 1 037 375
- DE-A1- 10 005 995
- DE-T2- 60 313 666
- DE-U1-202011 004 513
- US-A- 5 684 376
- US-A1- 2015 180 377
- Eaton: "Solid-state soft startmotor controller and starter", , 1. Februar 2011 (2011-02-01), XP002770365, Gefunden im Internet: URL:http://www.eaton.com/ecm/idcplg?IdcSer vice=GET_FILE&dID=428122 [gefunden am 2017-05-19]

## Beschreibung

Die Erfindung betrifft eine Steuerung und ein Verfahren zum Steuern eines Antriebsmotors eines Warentransportbandes an einer Kasse.

An Kassen in Supermärkten und/oder Baumärkten sind regelmäßig Warentransportbänder vorgesehen, auf denen Kunden Waren ablegen können, die an der Kasse registriert und bezahlt werden. Die Warentransportbänder werden üblicherweise von einem Antriebsmotor angetrieben, der die Warentransportbänder in einem Start/Stopp-Betrieb antreibt. Dabei kann es zu einem ruckartigen Anfahren bzw. Stoppen des Warentransportbandes führen, was zum Taumeln und/oder Umkippen von auf dem Warentransportband angeordneten Gütern führen kann. Eine Reinigung einer solchen Anlage nach Auslaufen etwaiger Produkte kostet den Anwender viel Zeit und entsprechende Lohnkosten. Dadurch, dass es sich bei Kassentischen in Supermärkten um Massenprodukte handelt, sind die Kosten einer Lösung für dieses Problem von entscheidender Bedeutung.

Zum Antrieb von Warentransportbändern ist es bekannt, ein initiales Drehmoment von elektrischen Antriebsmotoren mittels eines zeitlich ansteigenden Phasenan- bzw. Phasenabschnitts zu reduzieren. Hierzu sind Phasenan- und/oder Phasenabschnittssteuerungen bekannt, _ die den Antriebsmotor des Warentransportbandes so ansteuern, dass das Warentransportband aus einem unangetriebenen Zustand mit einem zunächst reduzierten Drehmoment angetrieben werden. Dies hat zur Folge, dass Antriebsmotoren mit deutlich unter Vollast sanft anfahren können.

Phasenan- bzw. Phasenabschnittssteuerungen schneiden sinusförmige Eingangsspannungen bei Wechselstromverbrauchern so an bzw. ab, dass dem Verbraucher eine reduzierte Energie zur Verfügung gestellt wird. Dadurch können Warentransportbänder langsamer anfahren, was ein Umkippen auf dem Warentransportband befindlicher Waren reduzieren soll. Zum sanften Starten des Antriebsmotors kann der Anschnitt bzw. Abschnitt der Eingangsspannung stetig vergrößert werden, bis 100% des Drehmoments bzw. der Eingangswelle erreicht sind. Weitere Beispiele zum Steuern eines Elektromotors sind in XP-002770365, Eaton, "Solid-state soft startmotor controller and starter" offenbart. Ein Kassensystem wird in DE 603 13 666 T offenbart.

Druckschrift US 2015/0180377 betrifft einen Softstarter für einen Motor, der unter Anderem auch zum Antrieb eines Fördergurts eingesetzt werden kann. Hierbei wird ausgehend von Standardparametern eine Auto-Tuning Routine durchlaufen, um automatisch optimale Betriebsparameter für den Softstarter. Ein Initialdrehmoment für einen Kickstart beträgt dabei ca. 45%-50% des maximalen Drehmoments.

Druckschrift DE 100 05 995 A1 betrifft ein Verfahren zum Beschleunigen einer Anlage, wobei die Anlage mindestens einen elektrischen Motor und mindestens eine angetriebene Last umfasst. Mindestens ein Antrieb muss zum Antreiben der Last zumindest ein rotatorisches oder translatorisches Spiel überwinden. Beim Beschleunigen wird die Versorgungsspannung des mindestens einen Antriebs derart beeinflusst, dass eine Spannungszeitfläche der Versorgungsspannung erreicht wird, wobei die Spannungszeitfläche derart vorgewählt wird, dass das Spiel überwunden wird. Nach Überwinden des Spiels wird die Versorgungsspannung auf zumindest einen Wert oder einen Verlauf gesteuert, insbesondere zur Durchführung eines Nennbetriebs.

Druckschrift EP 2 763 916 A1 offenbart ein Verfahren zum Betreiben einer Förderanlage mit einem Gurt und mindestens einer Antriebstrommel zum Antreiben des Gurts, bei dem zum Verändern der Geschwindigkeit des Gurtes innerhalb eines durch eine erste Drehzahl der Antriebstrommel und eine zweite Drehzahl der Antriebstrommel definierten Zeitfensters das auf die Antriebstrommel wirkende Drehmoment gesteuert wird.

Trotz der Verwendung einer Phasenan- und/oder Phasenabschnittssteuerung können auf dem Warentransportband befindliche Waren umkippen, insbesondere beim Anfahren und Abbremsen des Warentransportbandes.

Der Erfindung liegt die Aufgabe zugrunde, das Ansteuern eines Antriebsmotors eines Warentransportbandes an einer Kasse zu verbessern, ein Umkippen von Waren auf dem Warentransportband zu reduzieren, und/oder die Kosten einer Ansteuerung zu reduzieren.

Diese Aufgabe wird durch die Gegenstände der unabhängigen Ansprüche gelöst. Bevorzugte Ausführungsformen sind die Gegenstände der abhängigen Ansprüche.

Ein erster Aspekt betrifft ein Kassensystem mit einer Steuerung für einen Antriebsmotor eines Warentransportbandes an einer Kasse mit einer Phasenan- und/oder Phasenabschnittssteuerung, die den Antriebsmotor so ansteuert, dass das Warentransportband aus einem unangetriebenen Zustand heraus mit einem reduzierten Drehmoment beschleunigt wird. Die Steuerung weist weiterhin eine Startsteuerung auf, die den Antriebsmotor so ansteuert, dass der Antriebsmotor beim Beschleunigen des Warentransportbandes aus dem unangetriebenen Zustand das Warentransportband zunächst mit unreduziertem Drehmoment antreibt, bevor die Phasenan- und/oder Phasenabschnittssteuerung das Warentransportband mit dem reduzierten Drehmoment weiter beschleunigt.

Diese Steuerung ergänzt und/oder erweitert eine Steuerung des Antriebsmotors bei Verwendung der Phasenan- und/oder Phasenabschnittssteuerung. Sowie eine Beschleunigung des Warentransportbandes aus dem unangetriebenen Zustand heraus erwünscht wird, die z.B. mittels eines Triggers angezeigt und/oder ausgelöst werden kann, bewirkt die Startsteuerung initial einen Antrieb des Warentransportbandes mit unreduziertem, also vollem Drehmoment. Dieses unreduzierte Drehmoment kann auch als Initialdrehmoment bezeichnet werden. Hierbei bedeutet das Antreiben mit unreduziertem Drehmoment, dass das Warentransportband mit zumindest etwa 95% seines SOLL-Drehmoments angetrieben wird. Mit dem SOLL-Drehmoment, welches auch als Betriebsdrehmoment bezeichnet werden kann, wird das Warentransportband angetrieben, wenn es auf dem Warentransportband angeordnete Waren mit einer im Wesentlichen konstanten SOLL-Transportgeschwindigkeit an die Kasse transportiert.

Insbesondere kann ein Antreiben mit unreduziertem Drehmoment bedeuten, dass das Warentransportband mit einem maximalen Drehmoment des Antriebsmotors angetrieben wird. Hierbei kann das maximale Drehmoment des Antriebsmotors von der Stärke und/oder Leistung einer benutzen Wechselspannungsquelle abhängen. Das maximale Drehmoment kann größer als das Betriebsdrehmoment sein.

Erst nachdem kurzzeitig von der Startsteuerung das unreduzierte Drehmoment, also das Initialdrehmoment, vom Antriebsmotor auf das Warentransportband einwirkt, übernimmt die Phasenan- und/oder Phasenabschnittssteuerung das weitere Beschleunigen des Warentransportbandes. Das kurzzeitige Antreiben mit unreduziertem, also vollem Drehmoment hilft dabei, eine anfängliche Trägheit des Warentransportbandes zu reduzieren und/oder zu überwinden. So hat sich herausgestellt, dass es schwierig ist, mittels einer voreingestellten Phasenan- und/oder Phasenabschnittssteuerung für eine zunächst unbekannte Warenbelastung des Warentransportbandes ein sanftes Anfahren des Warentransportbandes zu gewährleisten. So kann es von der tatsächlichen IST-Belastung und dem Gewicht auf dem Warentransportband abhängen, ob durch die Phasenan- und/oder Phasenabschnittssteuerung ein hinreichend sanftes Anfahren gewährleistet werden kann. Wenn eine anfänglich zugeführte Energie nicht ausreicht, um einen Anlaufstrom zu überwinden (auf Englisch: "starting current"), läuft der Antriebsmotor zunächst nicht richtig an. Erst wenn der Anlaufstrom überwunden ist, setzt sich das Warentransportband in Bewegung, was zu einem plötzlichen und/oder ruckhaften Beschleunigen führen kann, das wiederum zum unerwünschten Umkippen von Waren auf dem Warentransportband führen kann.

Um dieses Problem zu umgehen, können z.B. Gewichtssensoren eingesetzt werden, die die genaue Gewichtsbelastung auf dem Warentransportband feststellen können. Da Warentransportbänder länglich ausgebildet sein können, kann die Implementierung solcher Gewichtssensoren vergleichsweise kostspielig sein. Um die Implementierung solcher Gewichtssensoren überflüssig zu machen, und dadurch die Herstellungskosten zu senken, kann bei der erfindungsgemäßen Lösung vollständig auf die Verwendung solcher Gewichtssensoren und/oder anderer Sensoren verzichtet werden.

Während bei einem gewöhnlichen Phasenan- oder -abschnitt mit einer linearen Rampe für das Drehmoment für jede individuelle Last auf dem Warentransportband der Phasenanschnitt individuell modifiziert werden müsste, indem der initiale Phasenwinkel des Phasenanschnitts geändert wird, kann auf eine solche individuelle Ansteuerung im Rahmen der Erfindung verzichtet werden.

Eine andere Lösung zur Überwindung des Anlaufstroms könnte die Verwendung von Frequenzumrichtern sein, die zum Beispiel drei einzelne Phasen eines Antriebsmotors in ihrer Frequenz beeinflussen. Auch auf diese Weise kann ein sanfter und stabiler Anlauf des Warentransportbandes gewährleistet werden. Ein Nachteil dieser Technik sind jedoch die vergleichsweise hohen Kosten. Auch rein mechanische Lösungen wie z.B. Feder-Dämpfer-Systeme sind aufwendig, da zum Beispiel Federn ebenfalls in Abhängigkeit der Last auf dem Warentransportband angepasst werden müssten, um ein gleichmäßiges Starten und Stoppen zu ermöglichen. Bei der Steuerung gemäß dem ersten Aspekt kann auf Frequenzumrichter und/oder auf solche mechanischen Lösungen verzichtet werden, was die Kosten für die Steuerung und somit für das Kassensystem reduziert.

Mit der voranstehend beschriebenen Startsteuerung der erfindungsgemäßen Steuerung wird das initiale Drehmoment beim Starten des Warentransportbandes erhöht. Hierbei wird initial, also beim Starten des Warentransportbandes, für eine gewisse Zeit weder ein Anschnitt noch ein Abschnitt der Phase durchgeführt, sondern etwa 100% der Eingangsphase auf den Antriebsmotor durchgeschaltet. Dies ist gleichbedeutend damit, dass der Antriebsmotor das Warentransportband mit unreduziertem Drehmoment als Initialdrehmoment antreibt. Die Startsteuerung kann im Wesentlichen so lange für einen Antrieb des Warentransportbands mit unreduziertem Drehmoment sorgen, wie der Antriebsmotor mit Anlaufstrom betrieben wird. Insbesondere kann die Startsteuerung in etwa zu dem Zeitpunkt mit dem Antrieb unter unreduziertem Drehmoment aufhören, zu dem der Betrieb mit Volllaststrom (auf Englisch "full load current") beginnt. Hierbei wird das Warentransportband im Wesentlichen nur solange mit dem unreduzierten Drehmoment angetrieben, solange das Warentransportband noch nicht mit einer relevanten Geschwindigkeit läuft, sich also in seiner Anlaufphase befindet. Das Antreiben mit dem unreduzierten Drehmoment kann bereits beendet sein, bevor das Warentransportband etwa 20% seiner im Wesentlichen konstanten SOLL-Transportgeschwindigkeit erreicht hat, insbesondere bevor es etwa 10% seiner konstanten SOLL-Transportgeschwindigkeit erreicht hat.

Sowie der Volllaststrom erreicht ist, kann wie üblich eine Ansteuerung mit der Phasenan- und/oder Phasenabschnittssteuerung erfolgen, also mit der eigentlichen Rampe zum Starten des Warentransportbandes begonnen werden. Zu diesem Zeitpunkt kann das unreduziert anliegende Drehmoment abrupt, plötzlich, stufenartig und/oder steil reduziert und/oder zurückgefahren werden auf ein Rampenstartdrehmoment. Das Rampenstartdrehmoment ist dasjenige reduzierte Drehmoment, mit dem die Phasenan- und/oder Phasenabschnittssteuerung die Beschleunigung beginnt. Somit übernimmt die Phasenan- und/oder Phasenabschnittssteuerung die Steuerung der eigentlichen Beschleunigung des Warentransportbandes auf seine im Wesentlichen konstante SOLL-Transportgeschwindigkeit, nachdem die Startsteuerung die Überwindung und/oder Reduktion der Trägheit und/oder des Anlaufstroms geleistet hat.

Die Steuerung kann somit zumindest zweiteilig ausgebildet sein und sowohl die Phasenan- und/oder Phasenabschnittssteuerung aufweisen als auch die Startsteuerung.

Bei dem Antriebsmotor kann es sich um einen elektrischen Antriebsmotor handeln, insbesondere um einen einphasigen Elektromotor. Der Antriebsmotor kann ein bekanntes elektrisches Verhalten aufweisen. Durch Kenntnis des elektrischen Verhaltens des Antriebsmotors kann auf zusätzliche Sensoren, wie Gewichtssensoren und/oder Sensoren für den Motorstrom, verzichtet werden. Insbesondere kann der Antriebsmotor als ein Trommelmotor ausgebildet sein. Ein Trommelmotor eignet sich besonders zum Antrieb eines Warentransportbandes, da der Trommelmotor kompakt und Platz sparend ist und anstatt einer Umlenkrolle oder einer, z.B. von externen Mitteln angetriebenen, Antriebsrolle bei einem Warentransportband ausgebildet sein kann. Die Steuerung kann somit insbesondere zum Ansteuern eines Trommelmotors ausgebildet.

Bei dem Warentransportband kann es sich um ein übliches Förderband an einer handelsüblichen Kasse handeln. Das Warentransportband ist zur Ablage von Waren auf dem Warentransportband ausgebildet und dazu, auf dem Warentransportband angeordnete Waren zu der Kasse zu transportieren. Bei der Kasse kann es sich zum Beispiel um eine Supermarktkasse und/oder eine Baumarktkasse handeln.

Phasenan- und/oder Phasenabschnittssteuerung sind dem Fachmann grundsätzlich bekannt. Beispielsweise ist eine solche Phasenan- und/oder Phasenabschnittssteuerung im Dokument DE 10 2013 209 696 A1 näher beschrieben. In Zusammenhang mit der Phasenan- und/oder Phasenabschnittssteuerung wird auf die Offenbarung dieser Druckschrift Bezug genommen.

Die Phasenan- und/oder Phasenabschnittssteuerung steuert den Antriebsmotor so an, dass dieser das Warentransportband zunächst mit einem reduzierten Drehmoment, nämlich dem Rampenstartdrehmoment, beschleunigt. Dabei kann das Rampenstartdrehmoment z.B. etwa 20% bis etwa 50% des vollen Betriebsdrehmoments betragen. Die Phasenan- und/oder Phasenabschnittssteuerung kann das angelegte Drehmoment zumindest im Mittel stetig und/oder linear von dem reduzierten Rampenstartdrehmoment bis zum vollen, also unreduzierten, Betriebsdrehmoment erhöhen, das dem im Wesentlichen konstanten Transportdrehmoment entspricht. Dies führt zu einem sanften Anfahren des Warentransportbandes. Ist das volle Betriebsdrehmoment erreicht, wird das Warentransportband vom Antriebsmotor mit konstanter Geschwindigkeit und konstantem Drehmoment weiter angetrieben, bis zum Beispiel die Waren an einem Zielpunkt neben der Kasse angekommen sind und das Warentransportband wieder gestoppt werden kann.

Die Steuerung ermöglicht es, den Antriebsmotor und somit das vom Antriebsmotor angetriebene Warentransportband sanft zu starten, ohne beim Starten des Warentransportbandes das Drehmoment zu stark zu reduzieren. Die Steuerung ist zum Antreiben von unterschiedlich stark beladenen Warentransportbändern geeignet, insbesondere sowohl zum Antreiben von unbelasteten Warentransportbändern, als auch zum Antreiben von vollbelasteten Warentransportbändern. Gerade bei Warentransportbändern, die voll oder nahezu unter Vollast beladen sind, reduziert die Steuerung die anfängliche Trägheit so signifikant, dass ein sanftes Anfahren des Warentransportbandes ermöglicht wird. Solche stark beladenen Warentransportbänder fahren - wenn sie lediglich von einer herkömmlichen Phasenan- und/oder Phasenabschnittssteuerung angesteuert werden - regelmäßig ruckartig an. Die erfindungsgemäße Steuerung kann dieses Problem überkommen und deswegen gerade bei stark, voll oder nahezu unter Vollast beladen Warentransportbändern die Gefahr eines Umkippens von Waren reduzieren.

Gemäß einer Ausführungsform ist die Startsteuerung so ausgebildet, dass der Antriebsmotor das Warentransportband mit dem unreduzierten Drehmoment, also dem Initialdrehmoment, für einen vorgegebenen Zeitraum antreibt, bevor die Phasenan- und/oder Phasenabschnittssteuerung das Warentransportband mit dem reduzierten Drehmoment, nämlich dem Rampenstartdrehmoment, weiter beschleunigt.

Bei dieser Ausführungsform ist somit ein fester Zeitraum vorgegeben, für den die Startsteuerung das Warentransportband mit dem vollen Initialdrehmoment antreibt. Dieser vorgegebene Zeitraum kann auch als Initialzeitraum bezeichnet werden. Auf diese Weise kann auf Sensoren verzichtet werden, die den genauen Verlauf des Anlaufstroms und/oder des Volllaststroms ermitteln. Hierbei kann der vorgegebene Zeitraum hinreichend kurz ausgebildet sein und/oder ausgewählt sein, um ein Ansteuern mit unreduziertem Drehmoment bei mit relevanter Geschwindigkeit laufendem Antriebsmotor zumindest initial zu verhindern. Der vorgegebene Zeitraum, also der Initialzeitraum, kann in einer Ausführungsform sogar variabel einstellbar sein, um so z.B. auf eine durchschnittlich stärkere oder schwächere Belastung des Warentransportbandes zu reagieren.

In einer Weiterbildung dieser Ausführungsform beträgt der vorgegebene Zeitraum, also der Initialzeitraum, von etwa 50 Millisekunden bis etwa 500 Millisekunden. Insbesondere kann der vorgegebene Zeitraum von etwa 100 Millisekunden bis etwa 300 Millisekunden betragen. Ein solch kurzer Zeitraum ist üblicherweise nicht ausreichend, um das Warentransportband auf eine relevante Geschwindigkeit zu beschleunigen. Dieser kurze Zeitraum ist jedoch ausreichend, um eine initiale Trägheit beim Anlaufen des Warentransportbandes zu überwinden und/oder soweit zu reduzieren, dass die Phasenan- und/oder Phasenabschnittssteuerung das Warentransportband sanft weiter beschleunigen kann bis auf eine im Wesentlichen konstante Betriebsgeschwindigkeit und/oder SOLL-Transportgeschwindigkeit.

Gemäß einer Ausführungsform ist die Startsteuerung so ausgebildet, dass das Warentransportband mit dem unreduzierten Drehmoment so lange angetrieben wird, bis beim Antreiben des Warentransportbandes ein Volllaststrom erreicht wird. Bei dieser Ausführungsform kann zum Beispiel ein Laststrom durch den Antriebsmotor gemessen und/oder überwacht werden. Sowie festgestellt wird, dass der Antriebsmotor den Anlaufstrom überwunden hat und/oder den Volllaststrom erreicht hat, wird das unreduzierte Drehmoment abrupt, plötzlich, stufenartig und/oder steil zurückgefahren und auf dasjenige reduzierte Drehmoment reduziert, mit dem die Rampe der Phasenan- und/oder Phasenabschnittssteuerung die Beschleunigung beginnt. Diese Ausführungsform liefert eine besonders effiziente und optimierte Ansteuerung des Beschleunigungsvorgangs, da die Startsteuerung genau so lange das volle Drehmoment an das Warentransportband anlegt, wie zur Überwindung des Anlaufstroms benötigt wird. Deswegen ist die Steuerung besonders effizient zum sanften Anfahren des Warentransportbandes.

Gemäß einer Ausführungsform erhöht die Phasenan- und/oder Phasenabschnittssteuerung beim Beschleunigen des Warentransportbandes das Drehmoment des Antriebsmotors im Wesentlichen stetig und/oder linear bis zum vollen Drehmoment, nämlich dem Betriebsdrehmoment. Nachdem die Startsfeuerung initial für kurze Zeit das volle Drehmoment anlegt, übernimmt die Phasenan- und/oder Phasenabschnittssteuerung das weitere Beschleunigen des Warentransportbands. Dabei legt die Phasenan- und/oder Phasenabschnittssteuerung zunächst einen vorgegebenen ersten Anfangswert des Drehmoments an, nämlich das Rampenstartdrehmoment, das zum Beispiel von etwa 20% bis etwa 50% des vollen Drehmoments, also des Initialdrehmoments, betragen kann. Die Phasenan- und/oder Phasenabschnittssteuerung erhöht das zum Antreiben des Warentransportbandes verwendete Drehmoment von diesem reduzierten Anfangswert (dem Rampenstartdrehmoment) bis hin zum vollen, also unreduzierten Drehmoment, also dem Betriebsdrehmoment, über einen vorgegebenen Steigungszeitraum. Die Größe dieses Steigungszeitraums und die Höhe des Rampenstartdrehmoments bestimmen die Steilheit der Rampe, mit der die Phasenan- und/oder Phasenabschnittssteuerung das Warentransportband beschleunigt.

Gemäß einer Ausführungsform steigert die Phasenan- und/oder Phasenabschnittssteuerung beim Beschleunigen des Warentransportbandes das Drehmoment des Antriebsmotors im Wesentlichen ab einem vorbestimmten Rampenstartdrehmoment, das etwa 10% bis etwa 50% des Betriebsdrehmoments entspricht, insbesondere nach und nach, bis zum vollen Betriebsdrehmoment. Hierbei wird die Rampe somit nicht bei einem Rampenstartdrehmoment 0% des Betriebsdrehmoments gestartet, sondern sofort mit einem von Null verschiedenen Rampenstartdrehmoment. Das Rampenstartdrehmoment kann einstellbar sein.

Bevorzugt beträgt das Rampenstartdrehmoment von etwa 20% bis etwa 40% des Betriebsdrehmoments, insbesondere etwa 30% des Betriebsdrehmoments. Dadurch können auch größere Lasten sicher transportiert werden.

Gemäß einer Ausführungsform ist die Startsteuerung so ausgebildet, dass nach einem Anhalten des Warentransportbands eine Totzeit einer vorbestimmten Dauer vorgesehen ist, nach deren Ablauf das Warentransportband frühestens wieder beschleunigt wird. Mit anderen Worten wird ein erneuter Start des Warentransportbands um mindestens die Totzeit verhindert und/oder verzögert. Dadurch kann ein Aufschaukeln von Transportgütern auf dem Warentransportband reduziert werden, da durch einen ansonsten unkontrollierten Start-/Stopp-Betrieb sich Objekte mit einem höher gelagerten Schwerpunkt aufschwingen können und beim folgenden Start umkippen können. Die Totzeit dient dazu, Schwingung des Schwerpunktes zu reduzieren/eliminieren. Die Totzeit kann z.B. etwa 500 ms bis etwa 2000 ms betragen, bevorzugt etwa 750 ms bis etwa 1250 ms, besonders bevorzugt etwa 1000 ms.

Gemäß einer Ausführungsform steuert die Phasenan- und/oder Phasenabschnittssteuerung den Antriebsmotor weiterhin so an, dass das Warentransportband aus einem angetriebenen Zustand heraus mit einem zunächst reduzierten Drehmoment abgebremst wird, bevor der Antriebsmotor das Warentransportband nicht mehr antreibt. Anschließend steht das Warentransportband somit still. In dieser Ausführungsform bewirkt die Phasenan- und/oder Phasenabschnittssteuerung somit nicht nur ein sanftes Anfahren des Warentransportbandes, sondern auch ein sanftes Abbremsen des Warentransportbandes vom vollen Drehmoment, dem Betriebsdrehmoment, bis hin zu einem Drehmoment von Null. Hierbei wird sowohl beim Anfahren des Warentransportbandes als auch beim Abbremsen des Warentransportbandes ein möglichst sanfter Übergang geschaffen, wodurch ein Umkippen von Waren auf dem Warentransportband vermieden und/oder reduziert werden kann. Hierbei kann beim Abbremsen eine andere Rampenneigung eingesetzt werden als beim Anfahren des Warentransportbandes. Insbesondere kann die Rampenneigung beim Abbremsen kleiner als beim Anfahren ausgebildet sein. Dies kann dadurch erreicht werden, dass ein Neigungszeitraum, während dessen das Drehmoment vom Betriebsdrehmoment auf Null reduziert wird, länger ist als ein Steigungszeitraum, während dessen das Drehmoment vom z.B. vom Rampenstartdrehmoment auf das Betriebsdrehmoment erhöht wird. Durch langsameres Abbremsen wird die Gefahr eines Umkippens von Transportgütern reduziert. Hierbei kann z.B. ein Neigungszeitraum vom Betriebsdrehmoment bis zum Stillstand von etwa 500 ms bis etwa 1000 ms vorbestimmt sein, bevorzugt etwa 700 ms.

Allgemein kann als Steigungszeitraum, also als Beschleunigungsdauer der Rampe, etwa 300 ms bis etwa 700 ms vorbestimmt sein, bevorzugt etwa 500 ms.

Gemäß einer Ausführungsform ist ein Trigger zum Auslösen des Beschleunigens des Warentransportbandes aus dem unangetriebenen Zustand und/oder zum Auslösen eines Anhaltens des Warentransportbandes aus einem angetriebenen Zustand vorgesehen. Der Trigger kann zum Beispiel als eine Lichtschranke ausgebildet sein, die registriert, ob an einer bestimmten Position auf dem Warentransportband Waren angeordnet sind oder nicht. Alternativ oder zusätzlich kann zum Beispiel ein Fußpedal als Trigger zum Anfahren und/oder Abbremsen des Warentransportbandes vorgesehen sein, der von einer an der Kasse arbeitenden Bedienperson bedient werden kann. Sowie vom Trigger ein Startsignal zum Beschleunigen des Warentransportbandes ausgelöst wird, beginnt die Startsteuerung mit dem Anlegen des vollen Drehmoments an den Antriebsmotor und somit an das Warentransportband. Nach kurzer Zeit übernimmt die Phasenan- und/oder Phasenabschnittssteuerung das weitere sanfte Beschleunigen des Warentransportbandes. Auch beim Anhalten des Warentransportbandes kann der Trigger ein entsprechendes Stoppsignal erzeugen, das den Prozess des Anhaltens des Warentransportbandes auslöst, ggf. unter Phasenan- und/oder Phasenabschnitt.

Ein zweiter Aspekt betrifft eine Steuereinheit zum Bereitstellen einer Steuerung nach dem ersten Aspekt für ein Kassensystem, das das Warentransportband, den Antriebsmotor und die Phasenan- und/oder Phasenabschnittssteuerung aufweist.

Hierbei weist die Steuereinheit zumindest die Startsteuerung auf und ist als separates Bauteil ausgebildet. Weiterhin ist die Steuereinheit dazu ausgebildet, zwischen der Phasenan- und/oder Phasenabschnittssteuerung einerseits und dem Antriebsmotor andererseits angeschlossen zu werden. Die Steuereinheit kann als separates Bauteil verwendet werden, um bestehende Kassensysteme, die bereits eine Phasenan- und/oder Phasenabschnittssteuerung aufweisen, nachzurüsten mit der Steuereinheit. Die Steuereinheit ergänzt das bestehende Kassensystem um die Startsteuerung, die im Zusammenhang mit dem ersten Aspekt voranstehend beschrieben ist. Die Steuereinheit kann zum Beispiel als ein Bauteil ausgebildet sein, das lediglich elektrische Anschlüsse aufweist, insbesondere einen Anschluss zur Phasenan- und/oder Phasenabschnittssteuerung und eines weiteren Anschlusses zum Antriebsmotor. Die Steuereinheit kann kompakt ausgebildet sein und somit besonders günstig zur Nachrüstung bestehender Kassensysteme dienen.

In einer Weiterbildung weist die Steuereinheit einen eigenen Stromanschluss auf, der separat zu einem Stromanschluss der Phasenan- und/ Phasenabschnittssteuerung ausgebildet ist. In dieser Ausführungsform weist die Steuereinheit ihren eigenen Stromanschluss auf, und ist somit unabhängig von einer Stromzufuhr von der bereits im Kassensystem vorhandenen Phasenan- und/oder Phasenabschnittssteuerung. Hierdurch kann ein Anlegen des unreduzierten, vollen Drehmoments zum initialen Anfahren und/oder Beschleunigen des Warentransportbandes verbessert werden und/oder ermöglicht werden.

In einer Ausführungsform weist die Steuereinheit eine eigene, interne Phasenan- und/oder Phasenabschnittssteuerung auf, die anstelle der Phasenan- und/oder Phasenabschnittssteuerung des Kassensystems das Warentransportband mit dem reduzierten Drehmoment weiter beschleunigt, nachdem die Startsteuerung beim Beschleunigen des Warentransportbandes aus dem unangetriebenen Zustand das Warentransportband mit zunächst unreduziertem Drehmoment antreibt. Die Steuereinheit weist somit die eigene, interne Phasenan- und/oder Phasenabschnittssteuerung als eine zweite Phasensteuerung auf, die das eigentliche sanfte Beschleunigen des Warentransportbandes übernimmt. Die erste Phasensteuerung, also die Phasenan- und/oder Phasenabschnittssteuerung des Kassensystems, ist hierbei redundant und wird eigentlich nicht mehr benötigt, sondern von der internen, zweiten Phasenan- und/oder Phasenabschnittssteuerung ersetzt. In dieser Ausführungsform kann die Steuereinheit lediglich von der ersten Phasenan- und/oder Phasenabschnittssteuerung des Kassensystems kommende Signale erhalten, wie z.B. ein Startsignal und/oder ein Stoppsignal, welche auslösen, ab wann mit einem Starten, Anlassen und/oder Abbremsen des Warentransportbandes zu beginnen ist. Hierbei dienen von der ersten Phasenan- und/oder Phasenabschnittssteuerung des Kassensystems kommende Signale für die Steuereinheit lediglich als Trigger und/oder Auslöser zum Starten und Anhalten des Warentransportbandes. Der Beschleunigungsvorgang des Warentransportbandes selber wird von der in der Steuereinheit ausgebildeten Startsteuerung und der internen, zweiten Phasenan- und/oder Phasenabschnittssteuerung gesteuert.

Ein dritter Aspekt betrifft eine Steuereinheit zum Bereitstellen einer Steuerung nach dem ersten Aspekt für ein Kassensystem, das das Warentransportband und den Antriebsmotor aufweist sowie einen Trigger zum Auslösen des Beschleunigens des Warentransportbandes aus dem unangetriebenen Zustand und/oder zum Auslösen eines Anhaltens des Warentransportbandes aus einem angetriebenen Zustand. Hierbei ist die Steuereinheit als ein separates Bauteil ausgebildet, das die Startsteuerung und die Phasenan- und/oder Phasenabschnittssteuerung als internes Bauelement aufweist und dazu ausgebildet ist, zwischen dem Trigger einerseits und dem Antriebsmotor andererseits angeschlossen zu werden. Diese Steuereinheit gemäß dem dritten Aspekt ist somit dazu geeignet, zwischen dem Trigger und dem Antriebsmotor eingebaut zu werden, um eine bereits bestehendes Kassensystem durch eine Steuerung gemäß dem ersten Aspekt zu ergänzen. Hierbei muss das aufzurüstende bzw. nachzurüstende Kassensystem noch nicht einmal eine eigene Phasenan- und/oder Phasenabschnittssteuerung aufweisen. Die Steuereinheit weist diese nämlich als eine eigene interne Phasenan- und/oder Phasenabschnittssteuerung auf, die das Beschleunigen des Warentransportbandes übernimmt, nachdem initial die Startsteuerung kurzzeitig das volle Drehmoment an das Warentransportband angelegt hat.

Bei einer Ausführungsform der Steuereinheit gemäß dem zweiten oder dritten Aspekt ist die Steuereinheit an mehrere Antriebsmotoren unterschiedlicher Warentransportbänder angeschlossen und zudem dazu ausgebildet, mit der zumindest einen Startsteuerung diese mehreren Antriebsmotoren anzusteuern. Diese Steuereinheit dient somit zum Steuern der Warentransportbänder eines Kassensystems, das eine Mehrzahl von Warentransportbändern aufweist, zum Beispiel an einer einzigen Kasse und/oder an mehreren Kassen. Hierbei können die einzelnen Warentransportbänder entweder baugleich ausgebildet sein, oder unterschiedlicher Bauart sein. So kann zum Beispiel an einer festen Anzahl von Kassen eine zumindest ebenso hohe Anzahl von Warentransportbändern ausgebildet sein. Ebenso können an einer einzigen Kasse eine Mehrzahl von Warentransportbändern vorgesehen sein, z.B. zumindest eines zum Warenantransport, und zumindest eines zum Warenabtransport. Die Steuereinheit kann auch für Kassensysteme eingesetzt werden, bei denen mehre Warentransportbänder Waren aus unterschiedlichen Richtungen hin zur Kasse und/oder weg von der Kasse transportieren können. Bei solchen Kassensystemen kann es zusätzlich vorgesehen sein, die Laufrichtung der einzelnen Warentransportbänder z.B. mittels der Steuereinheit individuell einzustellen und/oder anzusteuern. An alle oder einige dieser Warentransportbänder kann die Startsteuerung zumindest für einen kurzen Zeitraum initial beim Beschleunigungsvorgang das volle Drehmoment anlegen, bevor die zum jeweiligen Warentransportband gehörige Phasenan- und/oder Phasenabschnittssteuerung den weiteren Beschleunigungsvorgang übernimmt. Die Steuereinheit kann somit insbesondere zwischen einer Mehrzahl von Antriebsmotoren und einer Mehrzahl den einzelnen Antriebsmotoren zugeordneter Phasenan- und/oder Phasenabschnittssteuerungen geschaltet sein. Die Steuereinheit kann einige oder alle der unterschiedlichen Antriebsmotoren entweder mittels einer einzigen Startsteuerung ansteuern, oder es kann eine Mehrzahl von (z.B. parallel geschalteten) Startsteuerungen in der Steuereinheit vorgesehen sein, von denen jeweils eine zum Ansteuern zumindest jeweils eines der unterschiedlichen Antriebsmotoren ausgebildet ist. Insbesondere kann in der Steuereinheit pro anzusteuerndem Antriebsmotor jeweils eine Startsteuerung vorgesehen sein.

Bei einer Ausführungsform der Steuereinheit gemäß dem zweiten oder dritten Aspekt weist die Steuereinheit eine Schnittstelle auf
- zum Vornehmen von Softwareupdates für die Steuereinheit;
- zum Auslesen von Parametern und/oder Daten der Steuereinheit; und/oder
- zum Herstellen einer Verbindung zu einem Modul des Kassensystems.

Die Schnittschnelle kann z.B. als eine USB-, Bluetooth-, WIFI-, NFC- o.ä. Schnittstelle ausgebildet sein. Über diese Schnittstelle können z.B. Softwareupdates durchgeführt werden. Alternativ oder zusätzlich können über die Schnittstelle Parameter und/oder Daten der Steuereinheit ausgelesen werden, die z.B. zur Diagnose der Steuerbox und/oder der Steuereinheit verwendet werden können. Insbesondere können über die Schnittstelle nachfolgend beschriebene Nutzungsdaten und/oder Prognosedaten ausgelesen werden. Die Parameter und/oder Daten der Steuereinheit können beim Betrieb der Steuereinheit anfallende und/oder verwendete Daten umfassen, insbesondere:
- eine Anzahl von durchgeführten Start-/Stopp-Zyklen,
- eine Einschaltdauer und/oder
- ein aufgenommener Motorstrom.

Zusätzlich oder alternativ zur Schnittstelle kann die Steuereinheit einen Bus aufweisen. Die Schnittstelle und/oder der Bus kann zur Kommunikation mit umliegender Peripherie genutzt werden, wie z.B. Scanner, Kassensystem, Kassentischleuchte, Waage, weiteren Steuerboxen. Dadurch kann ein Mesh-Netzwerk aufgebaut werden.

Bei einer Ausführungsform der Steuereinheit gemäß dem zweiten oder dritten Aspekt weist die Steuereinheit einen Thermoschalter zum Überlastschutz des Antriebsmotors auf. Hierbei können an der Steuerbox Eingänge ausgebildet sein, an die Thermoswitche (z.B. Thermocuts) des oder der Antriebsmotors/-motoren angeschlossen werden können. Bei Überhitzung der Antriebsmotoren kann die Steuerbox in einen Fehler-Stopp-Zustand gehen. Hierbei kann manuell quittiert werden. Dies kann eine Verbesserung des Schutzes und der Haltbarkeit der Antriebsmotoren erzielt werden.

Bei einer Ausführungsform der Steuereinheit gemäß dem zweiten oder dritten Aspekt weist die Steuereinheit einen Speicherbaustein zum Abspeichern von Daten der Steuereinheit auf. Der Speicherbaustein kann insbesondere als ein magnetischer und/oder optischer Datenträger ausgebildet sein. Die Parameter und/oder Daten der Steuereinheit können beim Betrieb der Steuereinheit anfallende und/oder verwendete Daten umfassen, insbesondere:
- eine Anzahl von durchgeführten Start-/Stopp-Zyklen,
- eine Einschaltdauer und/oder
- ein aufgenommener Motorstrom.

In einer Weiterbildung dieser Ausführungsform weist die Steuereinheit ein Prognosemodul auf, welches ausgebildet ist, um aus den abgespeicherten Daten einen Prognosekennwert für eine Restlebensdauer des Antriebsmotors abzuleiten und/oder abzuschätzen. Das Prognosemodul kann beispielsweise unter Abspeichern und/oder Auslesen und/oder Auswerten der voranstehend beschriebenen Parameter und/oder Daten der Steuereinheit arbeiten, welche als Prognosedaten verwendet werden können. Hierbei können diese Prognosedaten in einem Speicherbaustein abgespeichert werden. Diese Prognosedaten können mit einem oder mehreren Grenzwerten verglichen werden, um in Abhängigkeit eines Überschreitens dieses einen (oder mehreren) Grenzwerte(s) ein Prognosesignal generieren, aus dem ein Prognosekennwert abgeleitet wird. Der Prognosekennwert kann eine Wahrscheinlichkeit eines Ausfalls und/oder Defekts des Bandantriebes in nächster Zeit enthalten. Dies kann dazu genutzt werden, mittels der Prognosedaten ermittelte, vermutlich demnächst fehlerhafte Bauteile präventiv auszutauschen, bevor ein Ausfall bzw. Defekt aufritt.

In zusätzlichen oder alternativen Weiterbildung der Ausführungsform weist die Steuereinheit ein Nutzungsprofilmodul auf, welches ausgebildet ist, um aus den abgespeicherten Daten einen Nutzungsprofil betreffend der Auslastung des Kassensystems abzuleiten und/oder abzuschätzen. Das Nutzungsprofilmodul kann beispielsweise unter Abspeichern und/oder Auslesen und/oder Auswerten der voranstehend beschriebenen Parameter und/oder Daten der Steuereinheit arbeiten, welche als Nutzerdaten verwendet werden können. Hierbei können diese Nutzerdaten in einem Speicherbaustein abgespeichert werden. Zusätzlich können die erhobenen Nutzerdaten über die voranstehend beschriebene Schnittstelle ausgegeben werden und/oder in der Steuerbox zum Erstellen von Nutzerstatistiken das Nutzungsprofils verwendet werden, die über die Schnittstelle ausgegeben werden können. Diese Auswertergebnisse und/oder Nutzerstatistiken können z.B. auf einem Display visualisiert ausgegeben werden. Das Nutzungsprofil kann bei der Erweiterung und/oder Erneuerung und/oder Veränderung des Kassensystems verwendet werden, um das veränderte neue Kassensystem auf die Auslastung vor Ort abzustimmen.

Als Prognosedaten und als Nutzerdaten können zumindest teilweise die gleichen Daten verwendet werden.

Die Steuereinheit kann ein Kommunikationsmodul aufweisen. Das Kommunikationsmodul kann über die voranstehend beschriebene Schnittstelle mit einer Wartungseinheit verbunden sein und/oder werden, welche einen Service informiert, ordert oder Wartungsmaßnahmen in die Wege leitet, insbesondere zur vorbeugenden Wartung.

Die Steuereinheit kann in einen Diagnosemodus gebracht werden. Im Diagnosemodus kann in Abhängigkeit einer abgeschätzten Restlebensdauer des Trommelmotors eine an die Steuereinheit direkt und/oder indirekt angeschlossene Peripherie (wie z.B. die angeschlossenen Kassentischleuchten) genutzt werden, um diese abgeschätzte Restlebensdauer für einen vorbestimmten und/oder vorgegebenen Zeitraum anzuzeigen und/oder zu visualisieren (z.B. durch grünes, gelbes rotes Leuchten der Kassentischleuchten). Die Restelebensdauer kann z.B. mittels des voranstehend beschriebenen Prognosemoduls abgeschätzt werden.

Im Diagnosemodus können über die voranstehend beschriebene Schnittstelle eine oder alle benachbarte(n) Steuerbox(en) in den Diagnosemodus versetzt werden, z.B. um auch durch die Peripherie an der bzw. den benachbarte(n) Steuerbox(en) die jeweils abgeschätzte Restlebensdauer anzuzeigen und/oder zu visualisieren.

Ein vierter Aspekt betrifft ein Kassensystem mit einer Steuerung gemäß dem ersten Aspekt, dem Warentransportband und dem Antriebsmotor. Da das Kassensystem die Steuerung gemäß dem ersten Aspekt aufweist, gelten alle voranstehend in diesem Zusammenhang gemachten Ausführungen auch für das Kassensystem gemäß dem vierten Aspekt.

In einer Weiterbildung des Kassensystems weist das Kassensystem eine Steuereinheit nach dem zweiten oder dritten Aspekt auf. Das Kassensystem dieser Ausführung kann somit mit der Steuereinheit nachgerüstet sein.

Ein fünfter Aspekt betrifft ein Verfahren zum Steuern eines Antriebsmotors eines Warentransportbandes an einer Kasse, wobei beim Beschleunigen des Warentransportbandes aus einem unangetriebenen Zustand heraus zunächst
- der Antriebsmotor so angesteuert wird, dass der Antriebsmotor das Warentransportband mit unreduziertem Drehmoment antreibt, bevor
- eine Phasenan- und/oder Phasenabschnittsteuerung den Antriebsmotor so ansteuert, dass das Warentransportband mit einem reduzierten Drehmoment weiter beschleunigt wird.

Das Verfahren gemäß dem fünften Aspekt kann an einer Steuerung gemäß dem ersten Aspekt durchgeführt werden. Deswegen treffen alle voranstehend im Zusammenhang mit dem ersten Aspekt gemachten Ausführungen auch auf das Verfahren gemäß dem fünften Aspekt zu und umgekehrt.

An Stelle des Begriffs "Phasenan- und/oder Phasenabschnittssteuerung" wird im Rahmen dieser Erfindung teilweise auch der vereinfachte Begriff Phasensteuerung verwendet.

Die Erfindung wird nachfolgend anhand von in Figuren gezeigten Ausführungsformen näher erläutert. Einzelne in den Figuren gezeigte Merkmale können mit anderen Ausführungsformen kombiniert werden. Es zeigen:
- Fig. 1: in einem Diagramm die Wirkungsweise einer Phasenabschnittssteuerung;
- Fig. 2: in einem Diagramm einen typischen Stromverlauf durch einen Antriebsmotor eines Warentransportbandes;
- Fig. 3: in einem Diagramm einen typischen Stromverlauf durch einen Antriebsmotor eines Warentransportbandes zusammen mit einem Verlauf einer Leistung, die erfindungsgemäß an den Antriebsmotor angelegt wird;
- Fig. 4: in einer schematischen Darstellung eine erfindungsgemäße Ansteuerung eines Antriebsmotors eines Warentransportbandes mit einer Phasenan- und/oder Phasenabschnittssteuerung;
- Fig. 5A: in einer schematischen Darstellung eine herkömmliche Ansteuerung eines Antriebsmotors eines Warentransportbandes;
- Fig. 5B: in einer schematischen Darstellung eine herkömmliche Ansteuerung eines Antriebsmotors eines Warentransportbandes, die mit einer erfindungsgemäßen Steuereinheit nachgerüstet ist; und
- Fig. 6: in einem Diagramm das angesteuerte Drehmoment gemäß einem Ausführungsbeispiel unter mehreren Start/Stopp-Zyklen.

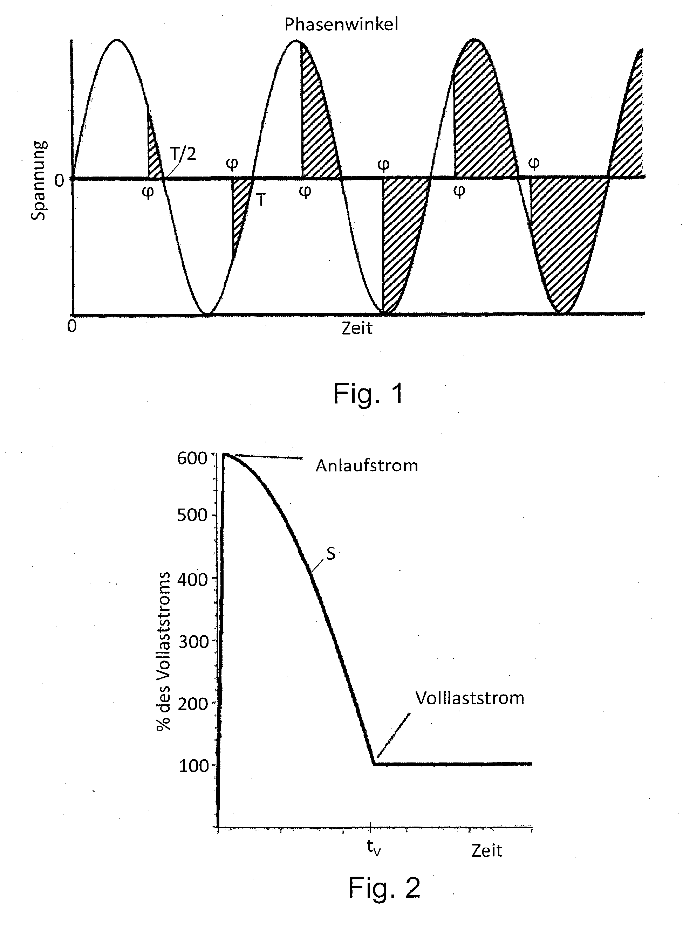

**Figur 1** zeigt in einem Diagramm die Wirkungsweise einer Phasenabschnittssteuerung. Das Diagramm zeigt den Spannungsverlauf einer Wechselspannung, die in etwa sinusförmig verläuft, aufgetragen über die Zeit. Bei der Spannung kann es sich zum Beispiel um eine typische Wechselspannung handeln, die vom z.B. einphasigen Stromnetz bereitgestellt wird. Um z.B. einen sanften Anlauf eines Warentransportbandes zu bewirken, schneidet eine Phasenabschnittssteuerung zum Beschleunigen eines Warentransportbandes einen Anteil der Phase der gezeigten Spannung an bzw. ab. Die Phasenabschnittssteuerung legt somit nur zu Teilen der Phasen die Wechselspannung auch tatsächlich einen Antriebsmotor des Warentransportbandes an.

Bei einer Periodendauer T könnte während eines ersten im Diagramm dargestellten Sinusbogens der Wechselspannung, der unmittelbar angrenzend zum Nullzeitpunkt im Diagramm dargestellt ist, vom Zeitpunkt 0 bis zum Zeitpunkt T/2 Spannung an den Antriebsmotor angelegt werden. Während dieses Zeitraums "schneidet" die Phasenabschnittssteuerung für einen Großteil der Zeit zwischen 0 und T/2 diese Spannung jedoch "ab", und legt die Spannung lediglich gegen Ende des gezeigten ersten Sinusbogens an den Antriebsmotor an.

Im gezeigten Diagramm sind die Zeiträume, in denen die Phasenabschnittssteuerung Spannung an den Antriebsmotor von z.B. einem Warentransportband anlegt, durch eine schraffierte Fläche zwischen der sinusförmigen Spannung und der Nullachse der Spannung markiert. Ist die besagte Fläche ungefüllt, also weiß dargestellt, "schneidet" die Phasenabschnittssteuerung die Spannung "ab", legt die Spannung also nicht an den Antriebsmotor an.

Während des ersten, positiven sinusförmigen Spannungsbogens (also im Zeitraum von 0 bis T/2) lässt die Phasenabschnittssteuerung lediglich zu den letzten etwa 15% der zugehörigen Zeitspanne von T/2 die Spannung "durch". Dieser Prozentsatz nimmt langsam von Sinusbogen zu Sinusbogen der Wechselspannung zu, bis die Phasenabschnittssteuerung bei dem ganz rechts dargestellten Sinusbogen, der in dem Diagramm der siebte Sinusbogen ist, die volle Phase und Spannung an den Antriebsmotor anlegt. Hierbei ist zu beachten, dass die Anzahl der Sinusbögen (oder eigentlich Halbsinusbögen) beispielhaft zu verstehen ist. In der Realität wird die Phasenabschnittssteuerung die volle Spannung regelmäßig erst zu einem wesentlich späteren Zeitpunkt durchlassen.

In anderen Worten legt die Phasenabschnittssteuerung die Spannung nur ab bestimmten Phasenwinkeln ϕ an den Antriebsmotor an. Die Phasenabschnittssteuerung legt die Spannung nur ab einem gewissen Startphasenwinkel ϕ bis zum nächsten Nulldurchgang der Wechselspannung an den Antriebsmotor an. Dieser Startphasenwinkel ϕ kann sich z.B. von Nulldurchgang zu Nulldurchgang der Wechselspannung ändern, so dass die Phasenabschnittssteuerung immer früher Spannung an den Antriebsmotor anlegt, bis die volle Spannung an den Antriebsmotor anlegt. Allgemein kann eine Phasensteuerung so ausgelegt sein, dass sie beim Beschleunigen pro Periode T der Wechselspannung im Mittel immer länger Spannung an den Antriebsmotor anlegt, bis sie die volle Spannung anlegt.

Die Wirkungsweise einer Phasenanschnittssteuerung ähnelt der einer Phasenabschnittssteuerung. Ein Unterschied zwischen diesen beiden Phasensteuerungen besteht darin, dass die eine den Anfang eines Sinusbogens abschneidet, während die andere das Ende des Sinusbogens abschneidet. Ansonsten haben die beiden Phasensteuerungen, also die Phasenanschnittssteuerung und die Phasenabschnittssteuerung, eine ähnliche Wirkung. Während die eine Phasensteuerung ab einem Startphasenwinkel ϕ bis zum Nulldurchgang Spannung an den Antriebsmotor anlegt, legt die andere von einem Nulldurchgang nur bis zu einem Endphasenwinkel Spannung an. Da das Prinzip einer Phasenan- und/oder Phasenabschnittssteuerung einem Fachmann grundsätzlich bekannt ist, wird an dieser Stelle nicht weiter auf die Wirkungsweise einer Phasenan- und/oder Phasenabschnittssteuerung eingegangen, sondern diesbezüglich auf die einschlägige Fachliteratur verwiesen.

**Figur 2** zeigt in einem Diagramm einen typischen Stromverlauf S durch einen Antriebsmotor eines Warentransportbandes über die Zeit. Ab einem gewissen Zeitpunkt, der im Diagramm als Zeitpunkt tᵥ dargestellt ist, wird der Antriebsmotor unter Volllaststrom angetrieben. Vor dem Zeitpunkt tᵥ ist zunächst ein Anlaufstrom aufzubringen, der den Antriebsmotor und das Warentransportband aus einem unangetriebenen Zustand heraus bewegt. In diesem unangetriebenen Zustand ist das Warentransportband in einem ruhenden Zustand, in dem es sich nicht bewegt.

Um zum Beispiel die Trägheit des Warentransportbandes zu überwinden, ist zunächst der Anlaufstrom aufzubringen, der um ein Vielfaches größer als der später anliegende Volllaststrom ausgebildet ist. In dem in Figur 2 gezeigten Ausführungsbeispiel ist der Anlaufstrom initial in etwa sechsmal so groß wie der Volllaststrom. Da regelmäßig der Anlaufstrom wesentlich größer als der Volllaststrom ausgebildet ist, kann ein Starten eines Warentransportbandes mittels eines Antriebsmotors, der über eine Phasenan- oder Phasenabschnittssteuerung angesteuert wird, zu einem ruckartigen und plötzlichen Anfahren des Warentransportbandes führen. Dies liegt daran, dass das geringe Drehmoment, das während der ersten Sinusbögen (vgl. Figur 1) am Antriebsmotor anliegt, den hohen Anlaufstrom nicht bereitstellen kann. Dies führt dazu, dass das Warentransportband sich zunächst nicht bewegt, bevor es ruckartig anfährt.

Der in Figur 1 gezeigte Phasenanschnitt führt dazu, dass das Drehmoment, mit dem der Antriebsmotor das Warentransportband antreibt, zunächst niedrig ist und erst über die Zeit zunimmt. Diese Zunahme kann zum Beispiel stetig und/oder im Wesentlichen linear sein, abhängig von der Änderung des Phasenanschnitts durch die Phasenan- bzw. Phasenabschnittssteuerung. Das initial sehr geringe Drehmoment ist hierbei nicht ausreichend, um den hohen Anlaufstrom bereitzustellen, wie er in Figur 2 gezeigt ist.

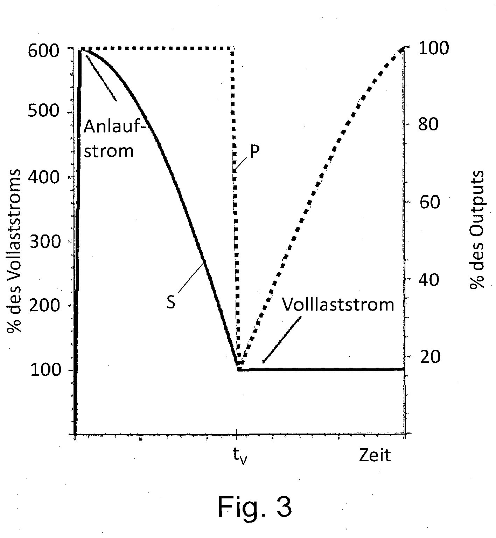

**Figur 3** zeigt in einem Diagramm einen typischen Stromverlauf S durch einen Antriebsmotor eines Warentransportbandes zusammen mit einem Leistungsanteil, der erfindungsgemäß an den Antriebsmotor angelegt wird. Der Verlauf der angelegten Leistung ist in Figur 3 mit P gekennzeichnet. Erfindungsgemäß kann so lange etwa 100% der Leistung P und somit etwa 100% des Drehmoments angelegt werden, also etwa 100% der Phase durchgelassen werden, bis der Anlaufstrom überwunden ist. Im gezeigten Ausführungsbeispiel ist somit von Anlasszeitpunkt t=0 an bis zum Zeitpunkt tᵥ, an dem der Volllaststrom erreicht wird, das volle Drehmoment an dem Warentransportband angelegt. Erst ab dem Zeitpunkt tᵥ übernimmt die Phasenan- und/oder Phasenabschnittssteuerung mit dem Erhöhen des Drehmoments unter Volllaststrom, bis wiederum etwa 100% des Leistungsoutputs P, also etwa 100% des Drehmoments und etwa 100% der Phase angelegt werden.

Theoretisch kann der in Figur 3 gezeigte Verlauf der angelegten Leistung P und Phase vorteilhaft sein, bei der das volle Drehmoment bis exakt zum Zeitpunkt tᵥ an den Antriebsmotor angelegt wird, also exakt bis zum Erreichen des Volllaststroms. In der Praxis kann statt dessen das volle, also unreduzierte Drehmoment auch für einen fest vorgegebenen Zeitraum angelegt werden, bevor die Phasenan- und/oder Phasenabschnittssteuerung die angelegte Spannung weiter regelt. Deswegen kann in der Praxis der Verlauf der angelegten Leistung, Phase und des Drehmoments von dem in Figur 3 gezeigten Leistungsverlauf P abweichen. So kann die stufenartige Reduktion des Drehmoments und/oder der Beginn der Rampe der Phasenabschnittssteuerung zu einem etwas vom Zeitpunkt tv abweichenden Zeitpunkt erfolgen, nämlich zu dem fest vorgegebenen Zeitraum. Bei Verwendung eines solch festen, vorgegebenen Zeitraums kann auf Sensoren verzichtet werden, die zum Beispiel den Motorstrom detektieren und/oder überwachen.

In dem in Figur 3 dargestellten Diagramm korrespondiert der Verlauf der Leistung P, der mit einer unterbrochenen Linie gekennzeichnet ist und der in Prozent angegeben ist, mit dem Öffnungswinkel der Phasenan- und/oder Phasenabschnittssteuerung, und/oder entspricht diesem. Hierbei entspricht 100% der Leistung dem vollen, also unreduzierten Drehmoment, das ohne Reduktion der Phase vom Antriebsmotor an das Warentransportband angelegt wird. Zum Stoppen des Antriebsmotors kann eine einfache, zum Beispiel lineare Rampe genutzt werden.

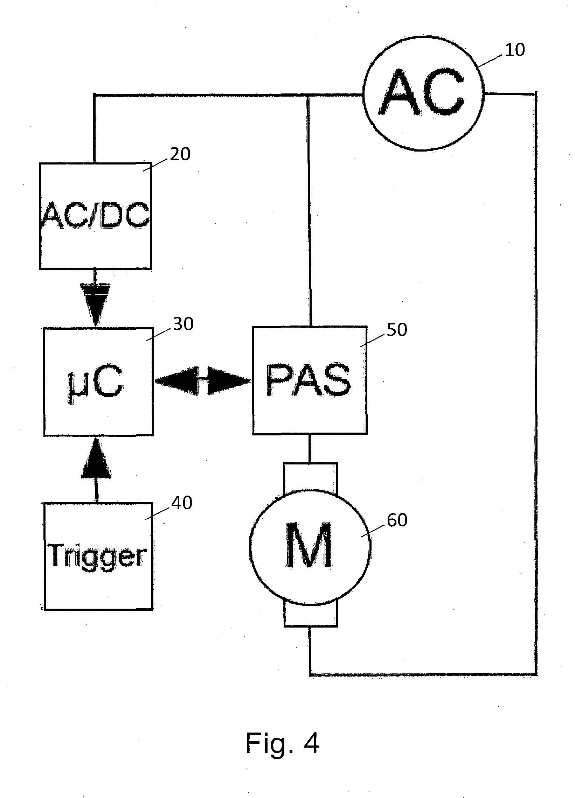

**Figur 4** zeigt in einer schematischen Darstellung eine Ansteuerung eines Antriebsmotors 60 eines Warentransportbandes mit einer Phasenan- und/oder Phasenabschnittssteuerung 50. Die Ansteuerung ist vereinfacht dargestellt. Eine Wechselspannungsquelle und/oder Stromquelle 10 ist sowohl mit einem Gleichrichter 20 als auch mit der Phasenan- und/oder Phasenabschnittssteuerung 50 verbunden. Der Gleichrichter 20 wandelt den von der Stromquelle 10 erhaltenen Wechselstrom in Gleichstrom um und speist damit einen Mikrocontroller 30. Der Mikrocontroller 30 erhält ein Signal von einem Trigger 40, der zum Beispiel als ein Sensor und/oder als ein Fußpedal ausgebildet sein kann. Vom Trigger 40 kann zum Mikrocontroller 30 sowohl ein Startsignal zum Anlassen eines Warentransportbandes aus einem unangetriebenen Zustand heraus gesendet werden, als auch ein Stoppsignal zum Anhalten des fahrenden Warentransportbandes.

Der Mikrocontroller 30 kann Signale mit der Phasenan- und/oder Phasenabschnittssteuerung 50 austauschen. So kann der Mikrocontroller 30 eine Startsteuerung aufweisen, die nach Erhalt des Startsignals vom Trigger 40 der Phasenan- und/oder Phasenabschnittssteuerung 50 mitteilt, zunächst das volle Drehmoment an den Antriebsmotor 60 anzulegen, bevor mit dem Phasenanschnitt begonnen wird. Hierbei kann der Mikrocontroller 30 auch den vorgegebenen Zeitraum steuern und/oder regeln, für den das volle Drehmoment an den Antriebsmotor 60 angelegt wird.

Die Phasenan- und/oder Phasenabschnittssteuerung 50 ist mit der Stromquelle 10 verbunden, dessen Phase sie, wie in Figur 1 gezeigt, so steuert, dass die Phase an- und/oder abgeschnitten wird. Die Phasenan- und/oder -abschnittssteuerung 50 ist weiterhin mit dem Antriebsmotor 60 verbunden, wobei die Phasenan- und/oder Phasenabschnittssteuerung 50 das Drehmoment steuert, dass der Antriebsmotor 60 an ein Warentransportband an einer Kasse anlegt. Der Antriebsmotor 60 kann zum Beispiel als ein Einphasenasynchronmotor in Steinmetzschaltung ausgebildet sein, der an einem Kassensystem und/oder Kassentischsystem mit dem Warentransportband als Förderband angeordnet ist. Die Verwendung eines Antriebsmotors in Steinmetzschaltung weist den Vorteil auf, dass kein spezieller Drehstrom zum Antreiben des Antriebsmotors notwendig ist, sondern normaler Wechselstrom, z.B. aus dem öffentlichen Stromnetz, zum Antrieb geeignet ist.

Die Wechselstromquelle 10 kann als eine typische 230 V/50 Hz Wechselspannung ausgebildet sein. Der Gleichrichter 20 kann als ein Netzteil ausgebildet sein, das die von der Wechselstromquelle 10 zugeführte Wechselspannung in eine Gleichspannung umwandelt, die vom Mikrocontroller 30 genutzt wird. Der Mikrocontroller 30 kann als ein Modul ausgebildet sein, das die Phasenan- und/oder Phasenabschnittssteuerung startet und/oder stoppt. Die Phasenan- und/oder Phasenabschnittssteuerung 50 kann einen TRIAC (Abkürzung für "triode for alternating current") als Schalter aufweisen, einen Nulldurchgangsbaustein zur Synchronisation des Mikrocontrollers 30 mit der Wechselspannung und weiterhin elektrische Komponenten zum Anschluss einer induktiven Last, im gezeigten Ausführungsbeispiel dem Antriebsmotor 60.

Der Trigger 40 signalisiert dem Mikrocontroller den Prozess zu starten oder zu stoppen.

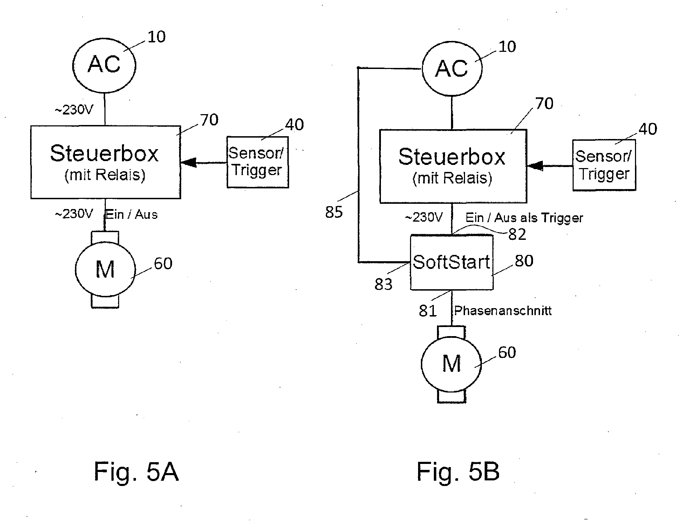

**Figur 5A** zeigt in einer schematischen Darstellung eine herkömmliche Ansteuerung eines Antriebsmotors 60 eines Warentransportbandes an einem Kassensystem. Die Wechselspannungsquelle 10 speist eine Steuerbox 70, die vom Trigger 40 ein Signal zum Starten und Stoppen des Prozessors erhält, also zum Beschleunigen und Anhalten eines Warentransportbandes. Die Steuerbox 70 kann eine Phasenan- und/oder Phasenabschnittssteuerung aufweisen, die wie voranstehend beschrieben die Energie und das Drehmoment steuert und/oder regelt, mit der der Antriebsmotor 60 das Warentransportband antreibt.

**Figur 5B** zeigt in einer schematischen Darstellung die in Figur 5A gezeigte Ansteuerung, die ergänzt ist um eine Steuereinheit 80. Die Steuereinheit 80 ist z.B. unmittelbar zwischen die Steuerbox 70 und den Antriebsmotor 60 geschaltet. Dazu weist die Steuereinheit 80 einen Eingang 82 auf, über den sie von der Steuerbox 70 das Signal erhält, wann das Warentransportband zu starten und/oder zu stoppen ist. Das Signal der Steuerbox 70 wird von der Steuereinheit 80 lediglich als Triggersignal verwendet, selbst wenn die Steuerbox 70 eine eigene Phasenan- und/oder Phasenabschnittssteuerung aufweisen sollte.

Die_ Steuereinheit 80 weist weiterhin einen Motorausgang 81 auf, über den die Steuereinheit 80 mit dem Antriebsmotor 60 verbunden ist. Über den Motorausgang 81 kann die Steuereinheit 80 steuern und/oder regeln, mit wieviel Strom und/oder Spannung der Antriebsmotor 60 versorgt wird. Dadurch wird das Drehmoment gesteuert und/oder geregelt, das der Antriebsmotor 60 an das Warentransportband anlegt und mit dem er das Warentransportband antreibt.

Die Steuereinheit 80 weist weiterhin einen Stromanschluss 83 auf, über den die Steuereinheit 80 über eine Stromleitung 85 direkt mit der Wechselspannungsquelle 10 verbunden ist. Die Steuereinheit 80 weist somit einen eigenen, zusätzlichen Stromanschluss auf. Hierbei umgeht die Stromleitung 85 die Steuerbox 70 und kann somit separat von der Steuerbox 70 ausgebildet sein.

Die Steuereinheit 80 kann eine eigene, interne Phasenan- und/oder Phasenabschnittssteuerung aufweisen sowie die voranstehend beschriebene Startsteuerung mit dem Mikrocontroller. Die Steuereinheit 80 kann als ein separates Bauteil ausgebildet sein, mit dem das in Figur 5A gezeigte Kassensystem nachgerüstet werden kann.

Dadurch wird eine Möglichkeit bereitgestellt, mit der bereits installierte und/oder in Nutzung befindliche Kassensysteme so nachgerüstet werden können, dass sie die Vorteile der erfindungsgemäßen Steuerung erfahren können.

Hierdurch wird eine Erhöhung des Startdrehmoments eines elektrischen Motors bei Nutzung einer Phasenan- bzw. Phasenabschnittssteuerung bereitgestellt. Die voranstehend beschriebene Steuerung kann z.B. für elektrische Motoren, asynchrone Wechselstrommotoren, Trommelmotoren, Bandantriebe und/oder Kassentischsysteme angewendet werden. Durch die Steuerung wird dabei der Antriebsmotor sanft gestartet, ohne initial das Drehmoment zu stark zu reduzieren.

In einer Ausführungsform ist die Steuereinheit 80 so ausgebildet, dass sie selbst ohne Steuerbox 70 funktioniert. In dieser Ausführungsform ersetzt die Steuereinheit 80 die Steuerbox 70 vollständig, wobei sie unmittelbar zwischen die Wechselspannungsquelle 10, den Trigger 40 und den Antriebsmotor 60 geschalten wird. Hierbei kann auf eine weitere Steuerung verzichtet werden, so dass z.B. eine evtl. vorhandene Steuerbox 70 entfernt werden kann.

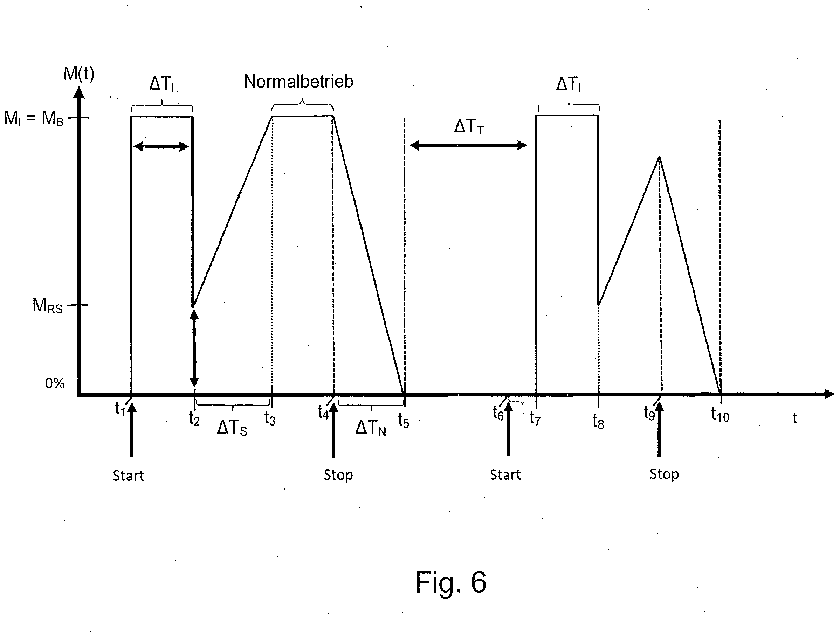

Fig. 6 zeigt in einem Diagramm das angesteuerte Drehmoment M(t) gemäß einem Ausführungsbeispiel unter mehreren Start/Stop-Zyklen. Hierbei ist an der x-Achse die Zeit t aufgetragen, an der y-Achse das angesteuerte Drehmoment von 0% bis 100% des maximalen Drehmoments. Hierbei muss das in Fig. 6 an der y-Achse gezeigte, angesteuerte Drehmoment M(t) nicht exakt dem tatsächlich zum jeweiligen Zeitpunkt anliegenden Drehmoment entsprechen muss. Genauer ist an der y-Achse der von der Steuerbox 70 und/oder der Steuereinheit 80 angesteuerte Phasenwinkel und/oder der Öffnungswinkel des entsprechenden Motorstellers in Prozent gezeigt, in einem Ausführungsbeispiel z.B. der Öffnungswinkel eines TRIACS. Wird das Warentransportband, wie gemäß einem Ausführungsbeispiel vorgesehen, mit zumindest einem Asynchronmotor betrieben, muss der angesteuerte Phasenwinkel nicht exakt dem tatsächlich anliegenden Drehmoment entsprechen. Deswegen ist das in Fig. 6 gezeigte Diagramm eher als schematische Prinzipskizze zu verstehen, in der an der y-Achse eigentlich der angesteuerten Phasenwinkel gezeigt ist, welcher aber einem angesteuerten, gewünschten und/oder angestrebten Drehmoment entspricht. Der als Prozentwert gezeigte Wert kann auch als angesteuertes Drehmoment M(t) bezeichnet werden.

Allgemein kann der im Rahmen dieser Erfindung benutzte Begriff "Drehmoment" auch als "angesteuertes Drehmoment" und/oder als "angesteuerter Phasenwinkel" verstanden werden. Gleiches gilt entsprechend für die Begriffe "Betriebsdrehmoment", "Initialdrehmoment", und "Rampenstartdrehmoment", die auch als "angesteuerter Betriebsphasenwinkel", "angesteuerter Initialphasenwinkel" und "angesteuerter Rampenstartphasenwinkel" verstanden werden können.

Unterhalb der Zeitachse sind abwechselnd Startzeitpunkte und Stoppzeitpunkte des Warentransportbands gekennzeichnet.

Aufeinander folgende Zeitpunkte sind mit t₁ bis t₁₀ gekennzeichnet.

Zum ersten Zeitpunkt t₁ wird ein Startsignal zum Antreiben des Warentransportbands generiert. Für eine vorgegebene Zeitdauer zwischen dem ersten Zeitpunkt t₁ und dem zweiten Zeitpunkt t₂ wird das Warentransportband mit einem Initialdrehmoment Mi betrieben. Das Initialdrehmoment Mi entspricht einem unreduzierten, vollen Drehmoment von 100% des Betriebsdrehmoment M_{B}. Das Initialdrehmoment Mi wird für einen Initialzeitraum ΔT_{I}(hier: t₂-t₁) angelegt, bis ein gewisser Anschub geleistet ist.

Zum zweiten Zeitpunkt t₂ wird das Drehmoment auf ein Rampenstartdrehmoment M_{RS} reduziert, das etwa 30% des vollen Betriebsdrehmoments M_{B} beträgt. Anschließend wird das Drehmoment für einen Steigungszeitraum ΔT_{S} im Wesentlichen linear und stetig erhöht bis, bis es zum dritten Zeitpunkt t₃ das volle Betriebsdrehmoment erreicht. Die Erhöhung wird unter Verwendung des Phasenan- und/oder Phasenabschnitts durchgeführt und dauert für den Steigungszeitraum ΔT_{S} an, der hier t₃-t₂ beträgt.

Vom dritten Zeitpunkt t₃ bis zum vierten Zeitpunkt t₄ liegt das volle Betriebsdrehmoment M_{B} an und das Warentransportband wird normal angetrieben, z.B. mit einer im Wesentlichen konstanten SOLL-Transportgeschwindigkeit. Am vierten Zeitpunkt t₄ wird ein Stoppsignal erzeugt und das Warentransportband zwischen dem vierten Zeitpunkt t₄ und dem fünften Zeitpunkt t₅ abgebremst auf 0% des Drehmoments. Das Abbremsen erfolgt im Wesentlichen linear und stetig unter Verwendung des Phasenan- und/oder Phasenabschnitts. Das Abbremsen ist so ausgelegt, dass es üblicherweise über einen vorbestimmten Zeitraum erfolgt, nämlich dem Neigungszeitraum ΔT_{N} (hier: t₅-t₄). Der Neigungszeitraum ΔT_{N} entspricht dem Zeitraum, über den das angelegte Drehmoment M(t) von Betriebsdrehmoment M_{B} auf Null reduziert wird.

Sowie das angelegte Drehmoment M(t) auf Null reduziert ist, also im gezeigten Beispiel zum fünften Zeitpunkt ts, wird eine Totzeit ΔT_{T} gestartet.

Zum sechsten Zeitpunkt t₆ wird erneut ein Startsignal erzeugt. Eine Überprüfung durch die Steuereinheit ergibt hierbei, dass zwischen dem fünften Zeitpunkt t₅ und dem sechsten Zeitpunkt t₆ weniger Zeit als die vorgegebene Totzeit von z.B. 1 s vergangen ist. Deshalb wird das Warentransportband noch nicht sofort gestartet, sondern zunächst bis zum siebten Zeitpunkt t₇ kein Drehmoment angelegt. Zum siebten Zeitpunkt t₇ ist die Totzeit abgelaufen (gemessen vom vollständigen Stopp des Warentransportbands zum fünften Zeitpunkt ts) und es wird ein neuer Beschleunigungszyklus gestartet. Mit anderen Worten gilt für das Ausführungsbeispiel: ΔT_{T} = t₇ - t₅.

Für eine vorgegebene Zeitdauer zwischen dem siebten Zeitpunkt tz und dem achten Zeitpunkt t₈ wird das Warentransportband wieder mit dem Initialdrehmoment M_{I} von 100% des Betriebsdrehmoments M_{B} angetrieben, bis ein gewisser Anschub geleistet ist, und zwar wieder für den vorgegebenen Initialzeitraum ΔT_{I}.

Zum achten Zeitpunkt t₈ wird das angelegte Drehmoment M(t) auf das Rampenstartdrehmoment M_{RS} reduziert, das etwa 30% des vollen Betriebsdrehmoments M_{B} beträgt. Anschließend wird das angelegte Drehmoment M(t) im Wesentlichen linear und stetig erhöht bis, bis an einem neunten Zeitpunkt t₉ ein Stoppsignal generiert wird, und zwar bevor 100% des Betriebsdrehmoments M_{B} erreicht sind.

Anschließend wird das Warentransportband zwischen dem neunten Zeitpunkt t₉ und dem zehnten Zeitpunkt t₁₀ abgebremst auf 0% des Drehmoments.

In einem Ausführungsbeispiel kann zumindest einer der folgenden Parameter der Steuerbox 70 und/oder der Steuereinheit 80 eingestellt werden:
- die Länge der Initialzeitraum ΔT_{I}, also der Zeitraum des Antriebs mit dem vollem Initialdrehmoment Mi beim Starten des Warentransportbands;
- die Länge der Totzeit ΔT_{T}, also des Zeitraums vor dem erneuten Beschleunigungsbeginn nach einem Abbremsen des Warentransportbands; und/oder
- die Größe des Rampenstartdrehmoments M_{RS}, also des Startpunkts der Beschleunigungsrampe.

Bevorzugt sind alle drei dieser Parameter einstellbar, um die Steuerbox 70 und/oder die Steuereinheit 80 an die speziellen Gegebenheiten des Kassensystems anzupassen.

### Bezugszeichenliste

- 10: Wechselstromquelle
- 20: Gleichrichter
- 30: Mikrocontroller
- 40: Trigger
- 50: Phasenan- und/oder Phasenabschnittssteuerung
- 60: Antriebsmotor
- 70: Steuerbox
- 80: Steuereinheit
- 81: Motorausgang
- 82: Eingang
- 83: Stromanschluss
- 85: Stromleitung
- M(t): angelegtes Drehmoment
- M_{B}: Betriebsdrehmoment
- Mi: Initialdrehmoment
- M_{RS}: Rampenstartdrehmoment
- S: Stromverlauf
- ΔT_{I}: Initialzeitraum
- ΔT_{N}: Neigungszeitraum
- ΔT_{S}: Steigungszeitraum
- ΔT_{T}: Totzeit
- P: Verlauf des Leistungsanteils
- t₁ ... t₁₀: erster bis zehnter Zeitpunkt
- t_{V}: Zeitpunkt, an dem Volllaststrom erreicht wird
- ϕ: Startphasenwinkel

## Patentansprüche

1. Kassensystem mit einem Warentransportband, einem Antriebsmotor (60) und einer Steuerung für den Antriebsmotor (60) des Warentransportbandes an einer Kasse, **dadurch gekennzeichnet, dass** die Steuerung aufweist:
- eine Startsteuerung, die den Antriebsmotor (60) so ansteuert, dass der Antriebsmotor (60) beim Beschleunigen des Warentransportbandes aus dem unangetriebenen Zustand das Warentransportband zunächst mit unreduziertem Drehmoment antreibt, bevor eine Phasenan- und/oder Phasenabschnittssteuerung (50) das Warentransportband mit dem reduzierten Drehmoment weiterbeschleunigt, und
- die Phasenan- und/oder Phasenabschnittssteuerung (50), die den Antriebsmotor (60) so ansteuert, dass das Warentransportband nach dem Einwirken des unreduzierten Drehmoments mit einem reduzierten Drehmoment beschleunigt wird.

2. Kassensystem nach Anspruch 1, wobei die Startsteuerung so ausgebildet ist, dass der Antriebsmotor (60) das Warentransportband mit dem unreduzierten Drehmoment für einen vorgegebenen Zeitraum antreibt, bevor die Phasenan- und/oder Phasenabschnittssteuerung (50) das Warentransportband mit dem reduzierten Drehmoment weiterbeschleunigt;
und/oder
wobei die Startsteuerung so ausgebildet ist, dass das Warentransportband mit dem unreduzierten Drehmoment solange angetrieben wird, bis beim Antreiben des Warentransportbandes ein Volllaststrom erreicht ist.

3. Kassensystem nach einem der vorangegangenen Ansprüche, wobei die Phasenan- und/oder Phasenabschnittssteuerung (50) beim Beschleunigen des Warentransportbandes das Drehmoment des Antriebsmotors im Wesentlichen stetig und/oder linear bis zum vollen Drehmoment erhöht;
und/oder
wobei die Phasenan- und/oder Phasenabschnittssteuerung (50) beim Beschleunigen des Warentransportbandes das Drehmoment des Antriebsmotors im Wesentlichen ab einem vorbestimmten Rampenstartdrehmoment (M_{RS}), das etwa 10% bis etwa 50% eines Betriebsdrehmoments (M_{B}) entspricht, bis zum vollen Betriebsdrehmoment (M_{B}) steigert.

4. Kassensystem nach einem der vorangegangenen Ansprüche, wobei die Startsteuerung so ausgebildet ist, dass nach einem Anhalten des Warentransportbands eine Totzeit (ÄT_{T}) einer vorbestimmten Dauer vorgesehen ist, nach deren Ablauf das Warentransportband frühestens wieder beschleunigt wird.

5. Kassensystem nach einem der vorangegangenen Ansprüche, wobei die Phasenan- und/oder Phasenabschnittssteuerung (50) den Antriebsmotor (60) weiterhin so ansteuert, dass das Warentransportband aus einem angetriebenen Zustand heraus mit einem zunächst reduzierten Drehmoment abgebremst wird, bevor der Antriebsmotor (60) das Warentransportband nicht mehr antreibt.

6. Kassensystem nach einem der vorangegangenen Ansprüche, wobei die Steuerung einen Trigger (40) aufweist zum Auslösen des Beschleunigens des Warentransportbandes aus dem unangetriebenen Zustand und/oder zum Auslösen eines Anhaltens des Warentransportbandes aus einem angetriebenen Zustand.

7. Kassensystem nach einem der vorangegangenen Ansprüche mit einer Steuereinheit (80) zum Bereitstellen der Steuerung; wobei die Steuereinheit (80) die Startsteuerung derart aufweist, dass sie als ein separates Bauteil ausgebildet ist und dazu ausgebildet ist, zwischen der Phasenan- und/oder Phasenabschnittssteuerung (50) einerseits und dem Antriebsmotor (60) andererseits angeschlossen zu werden.

8. Kassensystem nach Anspruch 7, wobei die Steuereinheit (80) einen eigenen Stromanschluss (83) aufweist, der separat zu einem Stromanschluss der Phasenan- und/oder Phasenabschnittssteuerung (50) ausgebildet ist;
und/oder
wobei die Steuereinheit (80) eine eigene, interne Phasenan- und/oder Phasenabschnittssteuerung aufweist, die an Stelle der Phasenan- und/oder Phasenabschnittssteuerung (50) des Kassensystems das Warentransportband mit dem reduzierten Drehmoment weiterbeschleunigt, nachdem die Startsteuerung beim Beschleunigen des Warentransportbandes aus dem unangetriebenen Zustand das Warentransportband mit zunächst unreduziertem Drehmoment antreibt.

9. Kassensystem nach einem der Ansprüche 1 bis 6 mit einer Steuereinheit (80) zum Bereitstellen der Steuerung; wobei die Steuereinheit (80) als ein separates Bauteil ausgebildet ist, das die Startsteuerung und die Phasenan- und/oder Phasenabschnittssteuerung als internes Bauelement aufweist und dazu ausgebildet ist, zwischen dem Trigger (40) einerseits und dem Antriebsmotor (60) andererseits angeschlossen zu werden.

10. Kassensystem nach einem der Ansprüche 7 bis 9, wobei die Steuereinheit (80) an mehrere Antriebsmotoren (60) unterschiedlicher Warentransportbänder angeschlossen ist und zudem dazu ausgebildet ist, mit der zumindest einen Startsteuerung diese mehreren Antriebsmotoren (60) anzusteuern;
und/oder
mit einer Schnittstelle
- zum Vornehmen von Softwareupdates für die Steuereinheit (80);
- zum Auslesen von Parametern und/oder Daten der Steuereinheit (80); und/oder
- zum Herstellen einer Verbindung zu einem Modul des Kassensystems.

11. Kassensystem nach einem der Ansprüche 7 bis 10, wobei die Steuereinheit (80) einen Thermoschalter zum Überlastschutz des Antriebsmotors (60) aufweist.

12. Kassensystem nach einem der Ansprüche 7 bis 11, wobei die Steuereinheit (80) einen Speicherbaustein zum Abspeichern von Daten der Steuereinheit (80) aufweist.

13. Kassensystem nach Anspruch 12, wobei die Steuereinheit (80) aufweist
- ein Prognosemodul, welches ausgebildet ist, um aus den abgespeicherten Daten der Steuereinheit einen Prognosekennwert für eine Restlebensdauer des Antriebsmotors (60) abzuleiten und/oder abzuschätzen und/oder
- ein Nutzungsprofilmodul, welches ausgebildet ist, um aus den abgespeicherten Daten der Steuereinheit einen Nutzungsprofil betreffend der Auslastung des Kassensystems abzuleiten und/oder abzuschätzen.

14. Verfahren zum Steuern eines Antriebsmotors (60) eines Warentransportbandes an einer Kasse eines Kassensystems,
**dadurch gekennzeichnet,**
**dass** beim Beschleunigen des Warentransportbandes aus einem unangetriebenen Zustand heraus zunächst
- der Antriebsmotor (60) so angesteuert wird, dass der Antriebsmotor (60) das Warentransportband mit unreduziertem Drehmoment antreibt, bevor
- eine Phasenan- und/oder Phasenabschnittssteuerung (50) den Antriebsmotor (60) so ansteuert, dass das Warentransportband mit einem reduzierten Drehmoment weiterbeschleunigt wird.

## Claims

1. A checkout system with a product conveyor belt, a drive motor (60) and a controller for the drive motor (60) of the product conveyor belt at a checkout with, **characterized in that** the controller comprises:
- a start controller that controls the drive motor (60) in such a manner that the drive motor (60) initially drives with a non-reduced torque when accelerating the product conveyor belt from the non-driven state before the phasestart cutting and/or phase-end cutting controller (50) further accelerates the product conveyor belt with reduced torque, and
- the phase-start cutting and/or phase-end cutting controller (50) which controls the drive motor (60) such that the product conveyor belt is driven with a reduced torque starting from a non-driven state, and.

2. The checkout system according to claim 1, wherein the start controller is configured such that the drive motor (60) drives the product conveyor belt with non-reduced torque for a set time period before the phase-start cutting and/or phase-end cutting controller (50) further accelerates the product conveyor belt with reduced torque;
and/or
wherein the start controller is configured such that the product conveyor belt is driven with the non-reduced torque until a full load current is reached when driving the product conveyor belt.

3. The checkout system according to any one of the preceding claims, wherein the phase-start cutting and/or phase-end cutting controller (50) increases the torque of the drive motor basically continuously and/or linearly up to the full torque when accelerating the product conveyor belt;
and/or
wherein the phase-start cutting and/or phase-end cutting controller (50) increases the drive motor torque basically beginning at a predetermined ramp starting torque (M_{RS}) that corresponds to about 10% to about 50% of an operating torque (M_{B}) up to the full operating torque (M_{B}) when accelerating the product conveyor belt.

4. The checkout system according to any one of the preceding claims, wherein the start controller is configured such that after a stoppage of the product conveyor belt, a dead time (ΔTt) of a predetermined duration is provided, after the expiration of which the product conveyor belt is re-accelerated as soon as possible.

5. The checkout system according to any one of the preceding claims, wherein the phase-start cutting and/or phase-end cutting controller (50) continues to control the drive motor (60) such that the product conveyor belt is braked from a driven state with an initially reduced torque before the drive motor (60) stops driving the product conveyor belt.

6. The checkout system according any one of the preceding claims, with a trigger (40) for initiating the acceleration of the product conveyor belt from the non-driven state, and/or for initiating a stoppage of the product conveyor belt from a driven state.

7. The checkout system according to any of the preceding claims having a control unit (80) for providing the controller;
wherein the control unit (80) comprises the start controller in a manner, that it is configured as a separate component and is configured to be connected between the phase-start cutting and/or phase-end cutting controller (50) on the one hand in the drive motor (60) on the other hand.

8. The checkout system according to claim 7, wherein the controller (80) comprises its own power connection (83) that is configured separately from a power connection for the phase-start cutting and/or phase-end cutting controller (50); and/or
wherein the controller (80) comprises its own internal phase-start cutting and/or phase-end cutting controller (50) that further accelerates the product conveyor belt with reduced torque instead of the phase-start cutting and/or phase-end cutting controller (50) of the checkout system after the start controller drives the product conveyor belt with initially non-reduced torque when accelerating the product conveyor belt from the non-driven state.

9. The checkout system according the any of claims 1 to 6 having a control unit (80) for providing the controller;
wherein the control unit (80) is configured as a separate component that has the start controller and the phase-start cutting and/or phase-end cutting controller as an internal component, and is configured to be connected between the trigger (40) on the one hand in the drive motor (60) on the other hand.

10. The checkout system according to any one of claims 7 to 9, wherein the control unit (80) is connected to a plurality of drive motors (60) of different product conveyor belts and is moreover configured to control this plurality of drive motors (60) with the at least one starting controller;
and/or
with an interface
- for undertaking software updates for the control unit (80);
- for reading out parameters and/or data from the control unit (80); and/or
- for establishing a connection to a module of the checkout system.

11. The checkout system according to any one of claims 7 to 10 wherein the control unit comprises a thermal switch for overload protection of the drive motor (60).

12. The checkout system according to any one of claims 7 to 11 wherein the control unit comprises a memory module for saving data from the control unit.

13. The checkout system according to claim 12, wherein the control unit comprises:
- a forecasting module that is configured to derive and/or estimate a forecast characteristic value for a residual life of the drive motor (60) from the saved data of the control unit,
and/or
- a usage profile module which is configured to derive and/or estimate a usage profile relating to the utilization of the checkout system from the saved data.

14. A method for controlling a drive motor (60) of a product conveyor belt at a checkout of a checkout system, **characterized in that** when accelerating the product conveyor belt from a non-driven state, initially:
- the drive motor (60) is controlled such that the drive motor (60) drives the product conveyor belt with non-reduced torque before
- a phase-start cutting and/or phase-end cutting controller (50) controls the drive motor such that the product conveyor belt is accelerated further with a reduced torque.

## Revendications

1. Système de caisse enregistreuse, comprenant un tapis de caisse, un moteur d'entraînement (60) et un dispositif de commande pour le moteur d'entraînement (60) du tapis de caisse au niveau d'une caisse enregistreuse,
**caractérisé en ce que** le dispositif de commande présente :
- une commande de démarrage qui pilote le moteur d'entraînement (60) de telle sorte que le moteur d'entraînement (60) lors de l'accélération du tapis de caisse à partir de l'état non entraîné, entraîne d'abord le tapis de caisse avec un couple non réduit avant qu'une commande par découpage de début de phase et/ou de fin de phase (50) ne poursuive l'accélération du tapis de caisse avec le couple réduit, et
- la commande par découpage de début et/ou de fin de phase (50) qui pilote le moteur d'entraînement (60) de telle sorte que le tapis de caisse est accéléré avec un couple réduit après l'action du couple non réduit.

2. Système de caisse enregistreuse selon la revendication 1,
dans lequel la commande de démarrage est réalisée de telle sorte que le moteur d'entraînement (60) entraîne le tapis de caisse avec le couple non réduit pendant une période prédéfinie avant que la commande par découpage de début et/ou de fin de phase (50) ne poursuive l'accélération du tapis de caisse avec le couple réduit ; et/ou
dans lequel la commande de démarrage est réalisée de telle sorte que le tapis de caisse est entraîné avec le couple non réduit jusqu'à ce qu'un courant pleine charge soit atteint lors de l'entraînement du tapis de caisse.

3. Système de caisse enregistreuse selon l'une quelconque des revendications précédentes,
dans lequel, lors de l'accélération du tapis de caisse, la commande par découpage de début et/ou de fin de phase (50) augmente le couple du moteur d'entraînement de manière substantiellement continue et/ou linéaire jusqu'au couple maximal ; et/ou
dans lequel, lors de l'accélération du tapis de caisse, la commande par découpage de début et/ou de fin de phase (50) augmente le couple du moteur d'entraînement substantiellement à partir d'un couple de début de rampe (M_{RS}) prédéterminé qui correspond à environ 10 % à environ 50 % d'un couple de fonctionnement (M_{B}) jusqu'au couple de fonctionnement maximal (M_{B}).

4. Système de caisse enregistreuse selon l'une quelconque des revendications précédentes, dans lequel la commande de démarrage est réalisée de telle sorte qu'après un arrêt du tapis de caisse, un temps mort (ÄT_{T}) d'une durée prédéterminée est prévu à l'issue duquel le tapis de caisse sera au plus tôt accéléré à nouveau.

5. Système de caisse enregistreuse selon l'une quelconque des revendications précédentes, dans lequel la commande par découpage de début et/ou de fin de phase (50) continue à piloter le moteur d'entraînement (60) de telle sorte que le tapis de caisse est décéléré à partir d'un état entraîné avec un couple d'abord réduit avant que le moteur d'entraînement (60) ne cesse d'entraîner le tapis de caisse.

6. Système de caisse enregistreuse selon l'une quelconque des revendications précédentes, dans lequel le dispositif de commande présente un déclencheur (40) pour déclencher l'accélération du tapis de caisse à partir de l'état non entraîné et/ou pour déclencher un arrêt du tapis de caisse à partir d'un état entraîné.

7. Système de caisse enregistreuse selon l'une quelconque des revendications précédentes, comprenant une unité de commande (80) pour fournir la commande ; dans lequel l'unité de commande (80) présente la commande de démarrage de telle sorte qu'elle est réalisée sous la forme d'un composant séparé et est réalisée pour être connectée entre la commande par découpage de début et/ou de fin de phase (50) d'une part et le moteur d'entraînement (60) d'autre part.

8. Système de caisse enregistreuse selon la revendication 7,
dans lequel l'unité de commande (80) présente sa propre connexion électrique (83) qui est réalisée séparément par rapport à une connexion électrique de la commande par découpage de début et/ou de fin de phase (50) ; et/ou
dans lequel l'unité de commande (80) présente sa propre commande par découpage de début et/ou de fin de phase interne qui, au lieu de la commande par découpage de début et/ou de fin de phase (50) du système de caisse enregistreuse, continue à accélérer le tapis de caisse avec le couple réduit après que la commande de démarrage entraîne le tapis de caisse d'abord avec un couple non réduit lors de l'accélération du tapis de caisse à partir de l'état non entraîné.

9. Système de caisse enregistreuse selon l'une quelconque des revendications 1 à 6, comprenant une unité de commande (80) pour fournir la commande ; dans lequel l'unité de commande (80) est réalisée sous la forme d'un composant séparé qui présente la commande de démarrage et la commande par découpage de début et/ou de fin de phase comme un composant interne, et est réalisée pour être connectée entre le déclencheur (40) d'une part et le moteur d'entraînement (60) d'autre part.

10. Système de caisse enregistreuse selon l'une quelconque des revendications 7 à 9, dans lequel l'unité de commande (80) est connectée à plusieurs moteurs d'entraînement (60) de différents tapis de caisse et est en outre réalisée pour piloter par ladite au moins une commande de démarrage lesdits plusieurs moteurs d'entraînement (60) ; et/ou
comprenant une interface
- pour procéder à des mises à jour de logiciel pour l'unité de commande (80) ;
- pour lire des paramètres et/ou des données de l'unité de commande (80) ; et/ou
- pour établir une liaison avec un module du système de caisse enregistreuse.

11. Système de caisse enregistreuse selon l'une quelconque des revendications 7 à 10, dans lequel l'unité de commande (80) présente un thermorupteur pour la protection contre les surcharges du moteur d'entraînement (60).

12. Système de caisse enregistreuse selon l'une quelconque des revendications 7 à 11, dans lequel l'unité de commande (80) présente un composant de mémoire pour mémoriser des données de l'unité de commande (80).

13. Système de caisse enregistreuse selon la revendication 12, dans lequel l'unité de commande (80) présente
- un module de pronostic qui est réalisé pour dériver et/ou estimer à partir des données mémorisées de l'unité de commande une grandeur caractéristique de pronostic pour une durée de vie restante du moteur d'entraînement (60), et/ou
- un module de profil d'utilisation qui est réalisé pour dériver et/ou estimer à partir des données mémorisées de l'unité de commande un profil d'utilisation concernant l'utilisation du système de caisse enregistreuse.

14. Procédé permettant de commander un moteur d'entraînement (60) d'un tapis de caisse au niveau d'une caisse enregistreuse d'un système de caisse enregistreuse, **caractérisé en ce que** lors de l'accélération du tapis de caisse à partir d'un état non entraîné, d'abord
- le moteur d'entraînement (60) est piloté de telle sorte que le moteur d'entraînement (60) entraîne le tapis de caisse avec un couple non réduit, avant
- qu'une commande par découpage de début et/ou de fin de phase (50) ne pilote le moteur d'entraînement (60) de telle sorte que le tapis de caisse continue d'être accéléré avec un couple réduit.
